# EUROPEAN PATENT SPECIFICATION

(11) **EP 2 882 048 B1**
(45) Date of publication and mention of the grant of the patent: **25.04.2018**
(21) Application number: 13828737.0
(22) Date of filing: 31.07.2013
(51) Int. Cl.: H01R 13/52, H01R 13/447, B60L 11/18

(54) **CHARGING INLET DEVICE**
LADUNGSEINLASSVORRICHTUNG
DISPOSITIF DE CHARGE

(30) Priority: 06.08.2012 JP 2012173805
(43) Date of publication of application: 10.06.2015
(73) Proprietor: Yazaki Corporation, Tokyo 108-0073 (JP)
(72) Inventor: FUKUSHIMA, Hirotaka, Kakegawa-shi Shizuoka 437-1421 (JP); SUGIYAMA, Daisuke, Kakegawa-shi Shizuoka 437-1421 (JP); SAWADA, Tsutomu, Kakegawa-shi Shizuoka 437-1421 (JP)
(74) Representative: Hoffmann Eitle
(86) International application number: PCT/JP2013/070751
(87) International publication number: WO 2014/024748

(56) References cited:
- WO-A1-2012/019625
- JP-A- H06 295 764
- JP-A- 2005 158 345
- JP-A- 2006 339 114
- JP-A- 2012 018 838
- JP-A- 2012 018 838
- JP-A- 2012 146 672
- US-A- 4 250 349
- US-A1- 2010 000 757

## Description

### TECHNICAL FIELD

The present invention relates to a charging inlet device installed, for example, in a vehicle for charging a battery.

### BACKGROUND ART

A charging inlet device is installed in a vehicle such as an electric vehicle (EV) and a hybrid electric vehicle (HEV) for charging a battery mounted on the vehicle (refer to JP 2010-166756 A and JP H10-152071 A). A conventional example of the charging inlet device is illustrated in Fig. 1.

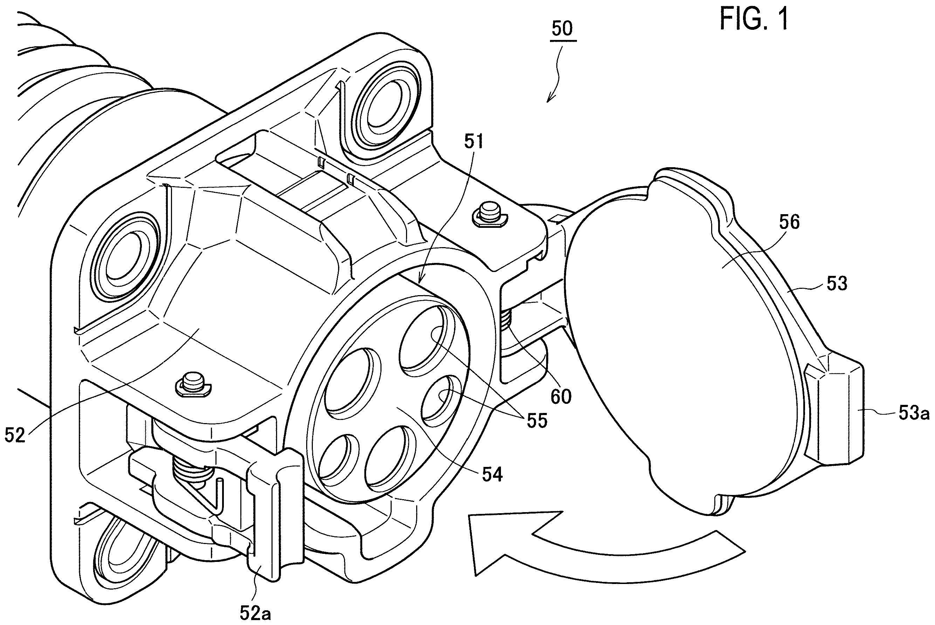

As illustrated in Fig. 1 , a conventional charging inlet device 50 includes a connector housing 51 housing terminals (not illustrated) therein, an exterior case 52 placed to cover the circumference of the connector housing 51, and a cap 53 rotatably supported on one side of the exterior case 52.

The connector housing 51 is formed into a cylindrical shape and includes a front wall 54 blocking the front of the cylindrical shape. The front wall 54 is provided with terminal insertion holes 55. Mating terminals (not illustrated) are inserted through the terminal insertion holes 55. The inserted mating terminals are then electrically connected to the terminals (not illustrated) housed in the connector housing 51.

The exterior case 52 is provided with a cap locking portion 52a.

The cap 53 is arranged to be rotatable between a closed position where the cap 53 is tightly attached to the front wall 54 to cover the terminal insertion holes 55 and an open position (as illustrated in Fig. 1) where the cap 53 is separated from the front wall 54 to open the terminal insertion holes 55 to the outside. The cap 53 is biased by a torsion coil spring 60 toward the open position. When the cap 53 is turned from the open position to the closed position, a locked portion 53a of the cap 53 is locked with the cap locking portion 52a. The cap 53 is thus held in the closed position.

A packing 56 is placed on the inner surface of the cap 53. The packing 56 has a diameter set to be identical with or slightly larger than that of the front end of the exterior case 52. When the cap 53 is held in the closed position, the packing 56 is directly attached to the front wall 54. The packing 56 thus reliably prevents water or dust from entering the terminal insertion holes 55.

The packing 56 is preferably formed of a light member in view of reduction in weight of the vehicle and a highly-elastic member in view of elimination of gaps and prevention of unstableness. The packing 56 is thus generally made of a rubber material (such as foam rubber).

Another example can be seen in document JP 2012 018838 A which discloses a charging inlet device having a connector housing and a lid.

### SUMMARY OF INVENTION

However, the packing 56 formed of a rubber material tends to stick to the front wall 54 if the cap 53 is held in the closed position for a long period of time. As a result, the cap 53 may not be turned toward the open position only by spring force of the torsion coil spring 60 even when the cap locking portion 52a is released. This situation requires a user to directly open the cap 53 by hand and complicates the operation of opening and closing the cap 53.

The present invention has been made to solve the above-described problem. An object of the present invention is to provide a charging inlet device capable of minimizing a risk of adhesion of a cap.

A charging inlet device according to a first aspect of the present invention includes a connector housing, a cap, and a packing. The connector housing is provided, on a front wall thereof, with terminal insertion holes through which mating terminals are inserted. The cap is arranged to be rotatable between a closed position where the cap is tightly attached to the front wall to cover the terminal insertion holes and an open position where the cap is separated from the front wall to open the terminal insertion holes to the outside. The packing is placed on the inner surface of the cap. At least one of the front wall and the packing is provided with a non-adhesion region where the front wall and the packing do not adhere to each other, the region being displaced from the terminal insertion holes.

The non-adhesion region is obtained in a manner such that the front wall is provided with recesses. The inner surface of each recess is an inclined surface at the lowermost portion thereof inclined downward from a horizontal direction when the charging inlet device is installed in a vehicle.

The non-adhesion region may be obtained in a manner such that the packing is provided with notches.

According to the charging inlet device of the first aspect of the present invention, the adhesion area between the packing and the front wall decreases so as to decrease the adhesion force of the packing. The charging inlet device thus can minimize a risk of adhesion of the cap.

### BRIEF DESCRIPTION OF DRAWINGS

[Fig. 1] Fig. 1 is a perspective view illustrating a charging inlet device of a conventional example.
[Fig. 2] Fig. 2 is a perspective view illustrating a charging inlet device according to an embodiment when a cap is located in an open position.
[Fig. 3] Fig. 3 is a perspective view illustrating the charging inlet device according to the embodiment when the cap is located in a closed position.
[Fig. 4] Fig. 4 is a front view illustrating a front wall of the charging inlet device according to the embodiment.
[Fig. 5] Fig. 5 is a cross-sectional view illustrating a tightly-attached state between a packing and the front wall of the charging inlet device according to the embodiment when the cap is located in the closed position.
[Fig. 6] Fig. 6 is a cross-sectional view illustrating a main portion of a recess on the front wall of the charging inlet device according to the embodiment.
[Fig. 7] Fig. 7 is a perspective view illustrating a charging inlet device according to a modified example of the embodiment when a cap is located in an open position.

### DESCRIPTION OF EMBODIMENTS

Hereinafter, an embodiment of the present invention will be explained with reference to the drawings.

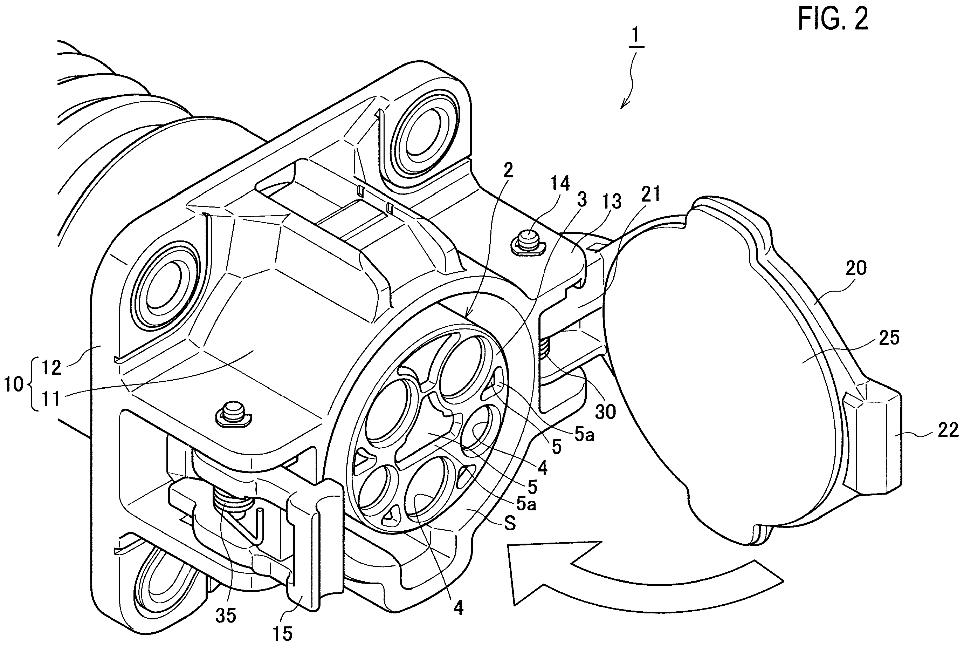

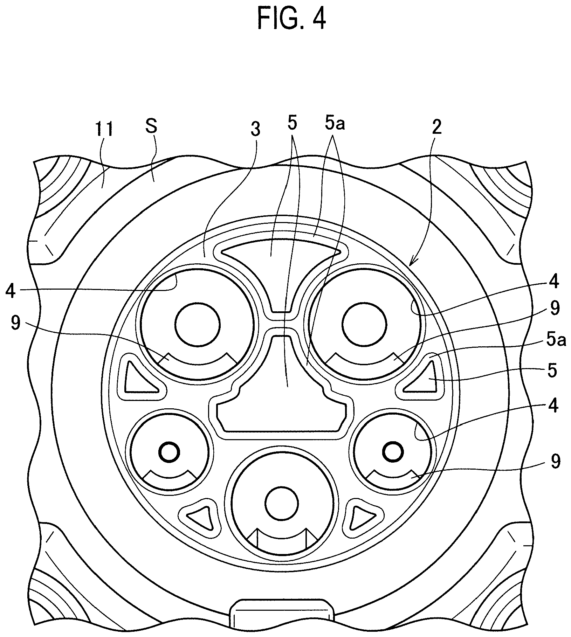

Figs. 2 to 6 are views each illustrating a charging inlet device 1 according to the embodiment. As illustrated in Figs. 2 to 4, the charging inlet device 1 includes a connector housing 2 housing terminals 9 therein, an exterior case 10 placed to cover the peripheral surface of the connector housing 2, and a cap 20 rotatably supported on one side of the exterior case 10.

The connector housing 2 is formed into a cylindrical shape and includes a front wall 3 blocking the front of the cylindrical shape. The front wall 3 is provided with a plurality of terminal insertion holes 4. The mating terminals (not illustrated) are inserted through the respective terminal insertion holes 4. The inserted mating terminals are thus electrically connected to the terminals 9 housed in the connector housing 2. The front wall 3 is provided, on the outer surface thereof, with a plurality of recesses 5. The recesses 5 are explained in detail below.

The exterior case 10 includes a fitting case 11 formed substantially into a cylindrical shape, and a bracket 12 integrally formed on the rear side of the fitting case 11. The charging inlet device 1 is fixed to the vehicle via the bracket 12. The region between the fitting case 11 and the circumference of the connector housing 2 serves as a fitting space S for a mating connector housing (not illustrated) to be connected (for example, on the charging stand side).

A pair of cap support portions 13 is provided with one side of the fitting case 11. A rotation support pin 14 is fixed to the cap support portions 13. A torsion coil spring 30 is supported by the rotation support pin 14. The torsion coil spring 30 is hooked on the fitting case 11 on one side and is hooked on the cap 20 on the other side.

A cap locking portion 15 is provided with the other side of the fitting case 11. The cap locking portion 15 is supported on the fitting case 11 to be swingable between a lock position and a lock-release position. The cap locking portion 15 is biased by a torsion coil spring 35 toward the lock position.

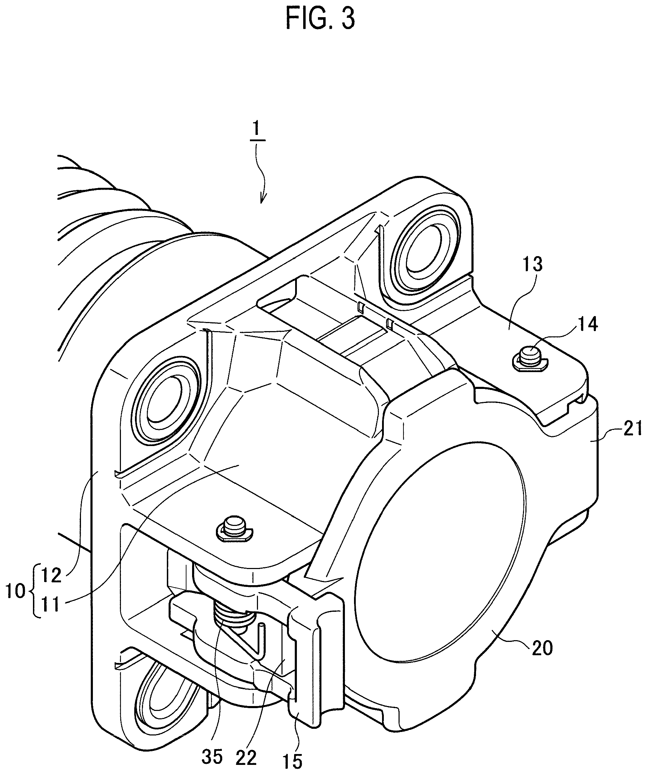

The cap 20 is formed substantially into a disk shape. The cap 20 includes a support portion 21 on one side thereof and a locked portion 22 on the other side. The support portion 21 is rotatably supported by the rotation support pin 14. The cap 20 is thus supported to be rotatable between a closed position where the cap 20 is tightly attached to the front wall 3 to cover the terminal insertion holes 4 and the fitting space S (as illustrated in Fig. 3) and an open position where the cap 20 is separated from the front wall 3 to open the terminal insertion holes 4 and the fitting space S to the outside (as illustrated in Fig. 2). The cap 20 is biased by the torsion coil spring 30 toward the open position. When the cap 20 is turned from the open position to the closed position, the locked portion 22 of the cap 20 is locked with the cap locking portion 15. The cap 20 is thus held in the closed position.

A packing 25 formed substantially into a disk shape is placed on the inner surface of the cap 20. The packing 25 has a diameter set to be identical with or slightly larger than that of the front end of the exterior case 10. When the cap 20 is located in the closed position, the packing 25 is directly attached to the front wall 3 of the housing 2 and the front end of the exterior case 10.

The packing 25 is formed of a light member in view of reduction in weight of the vehicle and a highly-elastic member, such as foam rubber, in view of elimination of gaps (sealing performance) and prevention of unstableness (prevention of noise).

The front wall 3 of the connector housing 2 is provided with the plural recesses 5. The recesses 5 are displaced from the terminal insertion holes 4 so as not to communicate with each other. The recesses 5 are areas where the cap 20 does not adhere to the front wall when the cap 20 is located in the closed position. In the charging inlet device 1 according to the embodiment, the recesses 5 serve as a non-adhesion region.

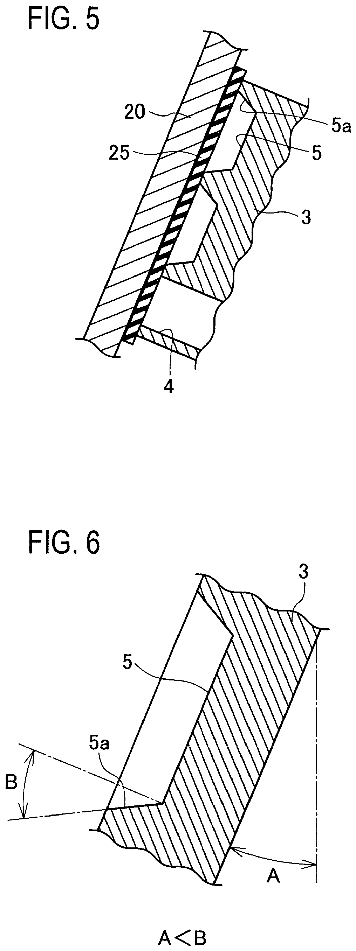

As illustrated in Figs. 5 and 6, when the front wall 3 of the connector housing 2 is arranged in the vehicle in such a manner as to be slightly inclined upward to make attachment angle A to the vertical direction, inclined angle B of an inner surface 5a of each recess 5 is set to be larger than attachment angle A. Thus, when the front wall 3 is in the vehicle installation state, the inner surface 5a of each recess 5 is an inclined surface at the lowermost portion thereof having an inclined angle inclined downward from the horizontal direction.

As illustrated in Fig. 5, when the cap 20 is located in the closed position, the packing 25 is tightly attached to the front wall 3 of the connector housing 2. Accordingly, the terminal insertion holes 4 of the front wall 3 are blocked so as to prevent water or dust from entering the connector housing 2 through the terminal insertion holes 4. When the cap locking portion 15 is moved to the lock-release position, the cap 20 is turned from the closed position to the open position due to the spring force of the torsion coil spring 30. As a result, the terminal insertion holes 4 of the connector housing 2 are open to the outside. The mating connector housing (not illustrated) thus can be fitted to the connector housing 2.

The packing 25 does not adhere to the front wall 3 either at the terminal insertion holes 4 or at the recesses 5 when the cap 20 is located in the closed position. Thus, the charging inlet device 1 according to the embodiment can decrease the adhesion area between the packing 25 and the front wall 3 compared with the conventional example so as to decrease the adhesion force of the packing 25 accordingly. Since the charging inlet device 1 according to the embodiment can decrease the adhesion force of the cap 20 toward the front wall 3 compared with the conventional example even with the cap 20 kept in the closed position for a long period of time, the cap 20 can be turned to the open position reliably only by the spring force of the coil spring 30 once the cap locking portion 15 is released. The charging inlet device 1 according to the embodiment thus can minimize a risk of adhesion of the cap 20.

The inner surface 5a of each recess 5 is the inclined surface at the lowermost portion thereof inclined downward from the horizontal direction when the charging inlet device 1 is installed in the vehicle. Thus, water or the like entering the recesses 5 comes out of the recesses 5 due to its own weight. Accordingly, the water or the like is prevented from remaining in the recesses 5.

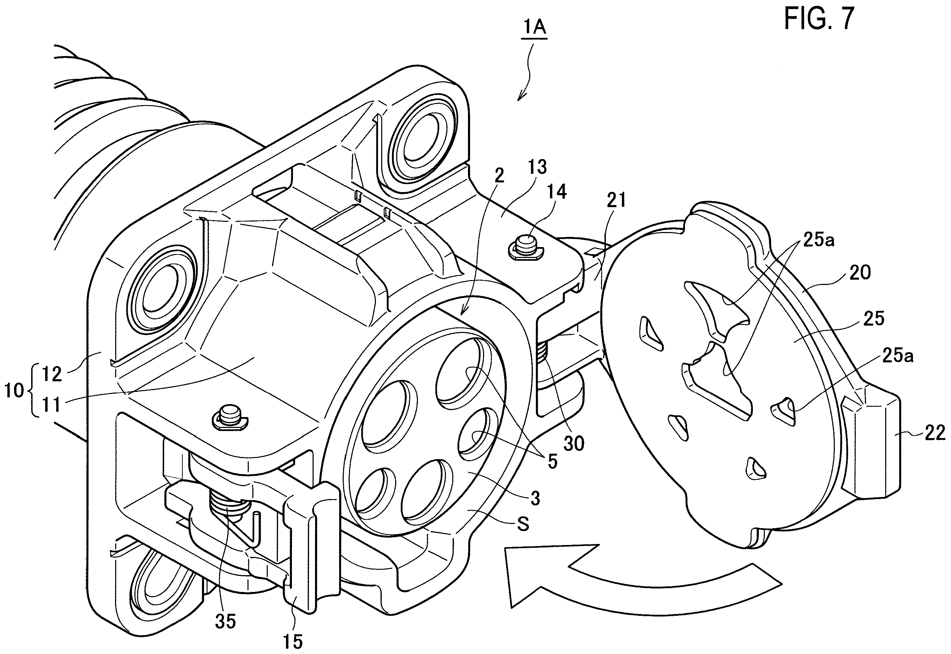

Fig. 7 is a view illustrating a charging inlet device 1A according to a modified example of the embodiment. The charging inlet device 1A according to the modified example does not include the recesses 5 on the front wall 3 of the connector housing 2, which is different from the charging inlet device 1 according to the embodiment. Instead, the packing 25 is provided with a plurality of notches 25a. The respective notches 25a are located at positions not corresponding to the terminal insertion holes 4 on the front wall 3. The notches 25a are portions not adhering to the front wall 3 when the cap 20 is located in the closed position. Namely, the charging inlet device 1A according to the modified example includes the notches 25a serving as a non-adhesion region.

The other configurations in the charging inlet device 1A according to the modified example are the same as those in the charging inlet device 1 according to the embodiment, and overlapping explanations thereof are not repeated below. In the charging inlet device 1A according to the modified example illustrated in Fig. 7, the same elements as those in the charging inlet device 1 according to the embodiment are indicated by the same reference numerals for convenience of explanation.

In the charging inlet device 1A according to the modified example, the packing 25 does not adhere to the front wall 3 either at the terminal insertion holes 4 or the notches 25a when the cap 20 is located in the closed position. Thus, the charging inlet device 1A according to the modified example can decrease the adhesion area between the packing 25 and the front wall 3 compared with the conventional example so as to decrease the adhesion force of the packing 25 accordingly. The charging inlet device 1A according to the modified example thus can minimize a risk of adhesion of the cap 20 as in the case of the charging inlet device 1 according to the embodiment. Here, the notches 25a may be grooves (recesses) having bottoms.

In addition, the front wall 3 of the connector housing 2 may be provided with the recesses 5, and the packing 25 may be provided with the notches 25a. In such a case, the recesses 5 may be located at different positions from the notches 25a, may be located at the same position as the notches 25a, or may be located at positions partly overlapping with the notches 25a.

As another modified example, a charging inlet device may include both the recesses 5 on the front wall 3 as in the case of the charging inlet device 1 according to the embodiment and the notches 25a on the packing 25 as in the case of the charging inlet device 1A according to the modified example. The charging inlet device having such a configuration can minimize a risk of adhesion of the cap 20 in the same manner as the charging inlet device 1 according to the embodiment.

### INDUSTRIAL APPLICABILITY

The present invention can provide a charging inlet device capable of minimizing a risk of adhesion of the cap.

## Claims

1. A charging inlet device installed in a vehicle, comprising:
a connector housing (2) provided, on a front wall (3) thereof, with a terminal insertion hole (4) through which a mating terminal is inserted;
a cap (20) arranged to be movable between a closed position where the cap (20) is attached to the front wall (3) to block the terminal insertion hole (4) and an open position where the cap (20) is separated from the front wall (3) to open the terminal insertion hole (4) outward; and
a packing (25) placed on an inner surface of the cap (20),
at least one of the front wall (3) and the packing (25) being provided with a non-adhesion region where the front wall (3) and the packing (25) do not adhere to each other, the region being displaced from the terminal insertion hole (4); wherein
the non-adhesion region is obtained in a manner such that the front wall (3) is provided with a recess (5); **characterized in that** the recess (5) has an inclined inner surface (5a) at a vertical lowermost portion of the recess, the inner surface (5a) being inclined downward from a horizontal direction.

2. The charging inlet device according to any one of claim 1, wherein
the non-adhesion region is obtained in a manner such that the packing (25) is provided with a notch (25a).

## Patentansprüche

1. Beschickungseinlassvorrichtung, die in einem Fahrzeug installiert ist, umfassend:
ein Steckverbindergehäuse (2), das an einer Stirnwand (3) desselben mit einem Klemmeneinsteckloch (4), durch das eine passende Klemme eingesteckt wird, versehen ist;
einen Deckel (20), der so angeordnet ist, dass er zwischen einer geschlossenen Stellung, in der der Deckel (20) an der Stirnwand (3) befestigt ist, um das Klemmeneinsteckloch (4) zu blockieren, und einer offenen Stellung, in der der Deckel (20) von der Stirnwand (3) getrennt ist, um das Klemmeneinsteckloch (4) nach außen zu öffnen, bewegbar ist; und
eine Dichtung (25), die auf einer Innenfläche des Deckels (20) platziert ist, wobei zumindest eine der Stirnwand (3) und der Dichtung (25) mit einem nicht haftenden Bereich versehen ist, in dem die Stirnwand (3) und die Dichtung (25) nicht aneinander anhaften, wobei der Bereich von dem Klemmeneinsteckloch (4) beabstandet ist; wobei der nicht haftende Bereich derart erzielt wird, dass die Stirnwand (3) mit einer Aussparung (5) versehen ist; **dadurch gekennzeichnet, dass**
die Aussparung (5) eine geneigte Innenfläche (5a) an einem vertikal untersten Abschnitt der Aussparung aufweist, wobei die Innenfläche (5a) von einer horizontalen Richtung aus nach unten geneigt ist.

2. Beschickungseinlassvorrichtung nach einem von Anspruch 1, wobei der nicht haftende Bereich derart erzielt wird, dass die Dichtung (25) mit einer Kerbe (25a) versehen ist.

## Revendications

1. Dispositif d'entrée de charge installé dans un véhicule, comprenant :
un boîtier de connecteur (2) pourvu, sur une paroi avant (3) de celui-ci, d'un orifice d'insertion de borne (4) à travers lequel une borne d'accouplement est insérée ;
un capuchon (20) agencé pour être mobile entre une position fermée où le capuchon (20) est attaché à la paroi avant (3) pour bloquer l'orifice d'insertion de borne (4) et une position ouverte où le capuchon (20) est séparé de la paroi avant (3) pour ouvrir l'orifice d'insertion de borne (4) à l'extérieur ; et
un garnissage (25) placé sur une surface interne du capuchon (20),
au moins l'une parmi la paroi avant (3) et le garnissage (25) étant muni d'une zone de non-adhérence où la paroi avant (3) et le garnissage (25) n'adhèrent pas l'un à l'autre, la région étant déplacée de l'orifice d'insertion de borne (4) ; dans lequel la région de non-adhérence est obtenue de sorte que la paroi avant (3) soit munie d'un évidement (5) ; **caractérisé en ce que**
l'évidement (5) a une surface interne inclinée (5a) au niveau d'une partie verticale la plus basse de l'évidement, la surface interne (5a) étant inclinée vers le bas à partir d'une direction horizontale.

2. Dispositif d'entrée de charge selon l'une quelconque des revendications 1, dans lequel la zone de non-adhérence est obtenue de manière telle que le garnissage (25) soit muni d'une entaille (25a).
